# EUROPEAN PATENT APPLICATION

(11) **EP 4 451 785 A1**
(43) Date of publication of application: **23.10.2024**
(21) Application number: 22906504.0
(22) Date of filing: 12.12.2022
(51) Int. Cl.: H04W 74/08

(54) **PRACH TRANSMISSION METHOD AND APPARATUS, AND TERMINAL**

(30) Priority: 16.12.2021 CN 202111545590
(71) Applicant: VIVO MOBILE COMMUNICATION CO., LTD., Dongguan, Guangdong 523863 (CN)
(72) Inventor: PAN, Xueming, Dongguan, Guangdong 523863 (CN); WU, Kai, Dongguan, Guangdong 523863 (CN); TAMRAKAR, Rakesh, Dongguan, Guangdong 523863 (CN)
(74) Representative: Conti, Marco
(86) International application number: PCT/CN2022/138394
(87) International publication number: WO 2023/109759

(57) **Abstract**

This application discloses a PRACH transmission method and apparatus, and a terminal, and relates to the field of communication technologies. The PRACH transmission method in the embodiments of this application includes: determining, by a terminal, a sending power of a physical random access channel PRACH repeated transmission according to a target indication, where the target indication is used for indicating whether sending powers of PRACH transmissions in the PRACH repeated transmission are the same; and performing, by the terminal, PRACH repeated transmission according to the sending power of the PRACH repeated transmission.

## Description

### CROSS-REFERENCE TO RELATED APPLICATIONS

This application claims priority to Chinese Patent Application No. 202111545590.2 filed on December 16, 2021, which is incorporated herein by reference in its entirety.

### TECHNICAL FIELD

This application relates to the field of communication technologies, and specifically, to a PRACH transmission method and apparatus, and a terminal.

### BACKGROUND

Physical random access channel (Physical Random Access Channel, PRACH) repeated transmission is a method for enhancing PRACH coverage. A user equipment (User Equipment, UE) selects the PRACH repeated transmission usually in a case of poor coverage. An initial power of the PRACH transmission in the related art comprehensively takes into account all terminals in a cell, including terminals with limited coverage and unlimited coverage, and usually does not reach a maximum power. A maximum value is only reached after a plurality of times of retransmission and power ramping.

In the related art, it is not clear how to determine a sending power of each PRACH transmission in the PRACH repeated transmission.

### SUMMARY

Embodiments of this application provide a PRACH transmission method and apparatus, and a terminal, which can resolve a problem of how to determine a sending power of each PRACH transmission in PRACH repeated transmission in the related art.

According to a first aspect, a PRACH transmission method is provided, including:
determining, by a terminal, a sending power of a physical random access channel PRACH repeated transmission according to a target indication, where the target indication is used for indicating whether sending powers of PRACH transmissions in the PRACH repeated transmission are the same; and
performing, by the terminal, PRACH repeated transmission according to the sending power of the PRACH repeated transmission.

According to a second aspect, a PRACH transmission apparatus is provided, including:
a determining module, configured to determine a sending power of a physical random access channel PRACH repeated transmission according to a target indication, where the target indication is used for indicating whether sending powers of PRACH transmissions in the PRACH repeated transmission are the same; and
a transmission module, configured to perform PRACH repeated transmission according to the sending power of the PRACH repeated transmission.

According to a third aspect, a terminal is provided. The terminal includes a processor and a memory. The memory stores a program or instructions executable on the processor. The program or the instructions, when executed by the processor, implement steps of the method according to the first aspect.

According to a fourth aspect, a terminal is provided, including a processor and a communication interface. The processor is configured to determine a sending power of a physical random access channel PRACH repeated transmission according to a target indication. The target indication is used for indicating whether sending powers of PRACH transmissions in the PRACH repeated transmission are the same. The communication interface is configured to perform PRACH repeated transmission according to the sending power of the PRACH repeated transmission.

According to a fifth aspect, a communication system is provided, including: a terminal and a network side device. The terminal may be configured to perform steps of the PRACH transmission method according to the first aspect.

According to a sixth aspect, a readable storage medium is provided, having a program or instructions stored therein. The program or the instructions, when executed by a processor, implement steps of the method according to the first aspect.

According to a seventh aspect, a chip is provided, including a processor and a communication interface. The communication interface is coupled to the processor. The processor is configured to execute a program or instructions, to implement steps of the method according to the first aspect.

According to an eighth aspect, a computer program/program product is provided. The computer program/program product is stored in a storage medium. The computer program/program product is executed by at least one processor to implement steps of the method according to the first aspect.

In the embodiments of this application, the terminal determines the sending power of the PRACH repeated transmission according to the target indication. The target indication is used for indicating whether the sending powers of the PRACH transmissions in the PRACH repeated transmission are the same. The terminal performs PRACH repeated transmission according to the sending power of the PRACH repeated transmission. The terminal may determine whether the sending powers of the PRACH transmissions in the PRACH repeated transmission are the same according to the target indication, to flexibly determine the sending power of the PRACH transmission in the PRACH repeated transmission, thereby improving transmission performance.

### BRIEF DESCRIPTION OF THE DRAWINGS

FIG. 1 is a structural diagram of a network system according to an embodiment of this application;
FIG. 2 is a flowchart of a PRACH transmission method according to an embodiment of this application;
FIG. 3a is a schematic diagram 1 of a counting manner of a power ramping counter in PRACH repeated transmission according to an embodiment of this application;
FIG. 3b is a schematic diagram 2 of a counting manner of a power ramping counter in PRACH repeated transmission according to an embodiment of this application;
FIG. 4 is a structural diagram of a PRACH transmission apparatus according to an embodiment of this application;
FIG. 5 is a structural diagram of a communication device according to an embodiment of this application; and
FIG. 6 is a structural diagram of a terminal according to an embodiment of this application.

### DETAILED DESCRIPTION

The following clearly describes the technical solutions in embodiments of this application with reference to the accompanying drawings in the embodiments of this application. Apparently, the described embodiments are some of the embodiments of this application rather than all of the embodiments. All other embodiments obtained by a person of ordinary skill in the art based on the embodiments of this application shall fall within the protection scope of this application.

In the specification and claims of this application, terms "first", "second", and the like are used to distinguish similar objects, but are unnecessarily used to describe a specific sequence or order. It may be understood that the terms used in such a way is interchangeable in proper circumstances, so that the embodiments of this application described herein can be implemented in other sequences than the sequence illustrated or described herein. The objects distinguished by "first" and "second" are usually of one type, and a number of objects is not limited, for example, a first object may be one or more first objects. In addition, "and/or" in the specification and claims indicates at least one of connected objects, and a character "/" generally indicates that connected objects are in an "or" relationship.

It should be noted that the technologies described in the embodiments of this application are not limited to a long term evolution (Long Term Evolution, LTE)/LTE-advanced (LTE-Advanced, LTE-A) system, and may further be applied to other wireless communication systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single carrier frequency division multiple access (Single Carrier Frequency Division Multiple Access, SC-FDMA), and other systems. The terms "system" and "network" in the embodiments of this application may usually be used interchangeably, and the technology described can be applied to the systems and radio technologies mentioned above, and can also be applied to other systems and radio technologies. The following description describes a new radio (New Radio, NR) system for example purposes, and NR terminology is used in most of the following description, but these techniques can also be applied to applications other than NR system applications, such as a 6th generation (6th Generation, 6G) communication system.

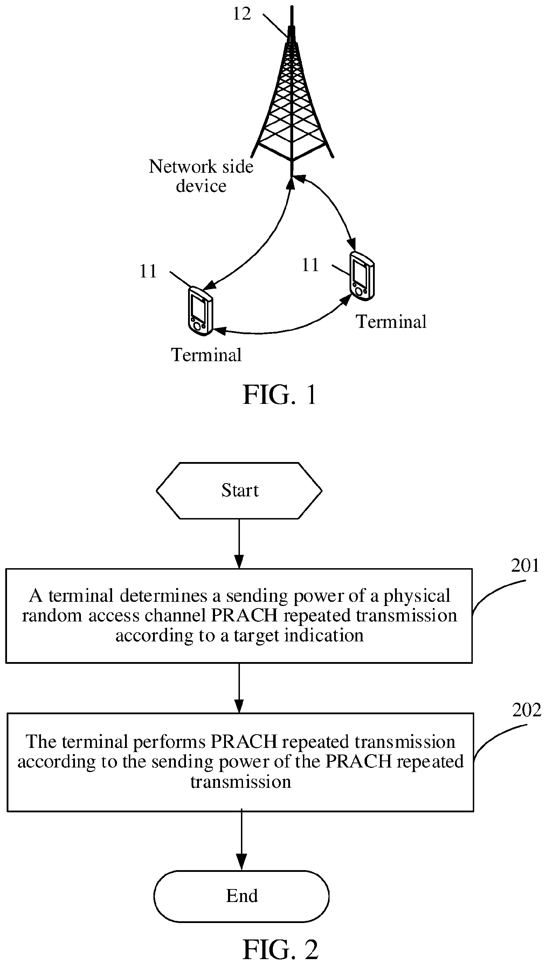

FIG. 1 is a block diagram of a wireless communication system to which an embodiment of this application may be applied. The wireless communication system includes a terminal 11 and a network side device 12. The terminal 11 may be terminal side devices such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (Augmented Reality, AR) or a virtual reality (Virtual Reality, VR) device, a robot, a wearable device (Wearable Device), a vehicle user equipment (Vehicle User Equipment, VUE), a pedestrian user equipment (Pedestrian User Equipment, PUE), a smart household (a household device with a wireless communication function, such as a refrigerator, a television, a washing machine, or furniture), a game console, a personal computer (personal computer, PC), a teller machine, or an automated machine. The wearable device includes: a smart watch, a smart bracelet, a smart earphone, smart glasses, smart jewelry (a smart bangle, a smart wrist chain, a smart ring, a smart necklace, a smart anklet, a smart ankle chain, and the like), a smart wristband, smart clothes, and the like. It should be noted that a specific type of the terminal 11 is not limited in the embodiments of this application. The network side device 12 may include an access network device or a core network device. The access network device 12 may also be referred to as an access network device, a radio access network (Radio Access Network, RAN), a radio access network function, or a radio access network unit. The access network device 12 may include a base station, a wireless local area network (Wireless Local Area Network, WLAN) access point, a wireless fidelity (Wireless Fidelity, Wi-Fi) node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmitting receiving point (Transmitting Receiving Point, TRP), or another proper term in the field. As long as a same technical effect is achieved, the base station is not limited to a specific technical term. It should be noted that in the embodiments of this application, the base station in the NR system is only used as an example for description, and a specific type of the base station is not limited.

The PRACH transmission method provided in the embodiments of this application is described below in detail through some embodiments and application scenarios thereof with reference to the accompanying drawings.

FIG. 2 is a flowchart of a PRACH transmission method according to an embodiment of this application. The PRACH transmission method includes the following steps.

Step 201: A terminal determines a sending power of a PRACH repeated transmission according to a target indication, where the target indication is used for indicating whether sending powers of PRACH transmissions in the PRACH repeated transmission are the same.

The target indication includes at least one of a protocol specified indication, a network side device indication, and a downlink control information (Downlink Control Information, DCI) indication of a physical downlink control channel (Physical Downlink Control Channel, PDCCH). For example, a protocol specifies that each time of (or each) PRACH transmission in the PRACH repeated transmission has a same sending power or different sending powers; or a network side device indicates that each PRACH transmission in the PRACH repeated transmission has a same sending power or different sending powers; or the DCI of the PDCCH indicates that each PRACH transmission in the PRACH repeated transmission has a same sending power or different sending powers.

Step 202: The terminal performs PRACH repeated transmission according to the sending power of the PRACH repeated transmission.

In this embodiment, the terminal determines the sending power of the PRACH repeated transmission according to the target indication. The target indication is used for indicating whether the sending powers of the PRACH transmissions in the PRACH repeated transmission are the same. The terminal performs PRACH repeated transmission according to the sending power of the PRACH repeated transmission. The terminal may determine whether the sending powers of the PRACH transmissions in the PRACH repeated transmission are the same according to the target indication, to flexibly determine the sending power of the PRACH transmission in the PRACH repeated transmission, thereby improving transmission performance.

Optionally, the sending power of the PRACH repeated transmission meets at least one of the following:
each PRACH transmission in the PRACH repeated transmission has a same sending power;
PRACH transmissions associated with a same reference signal in the PRACH repeated transmission have same sending powers; and
PRACH transmissions associated with different reference signals in the PRACH repeated transmission have different sending powers.

In other words, the target indication may be used for indicating that each PRACH transmission in the PRACH repeated transmission has the same sending power. For example, to ensure that the network side device can determine which PRACH transmission has the best reception quality in the PRACH repeated transmission, regardless of whether the reference signal associated with each PRACH transmission is the same, each PRACH transmission in the PRACH repeated transmissions is required to have the same sending power. Further, the same sending power can be determined based on a path loss estimate obtained before the first PRACH transmission in the PRACH repeated transmission, that is, the sending power of each PRACH transmission is determined by using the path loss estimate.

In a case that each PRACH transmission in the PRACH repeated transmission is associated with different reference signals, if each PRACH transmission in the PRACH repeated transmission has the same sending power, the network side device may determine, through an estimate receiving power transmitted by each PRACH transmission, which reference signal is the best reference signal in the reference signals associated with the PRACH transmission.

The network side device indicates that each PRACH transmission in the PRACH repeated transmission has a same sending power or different sending powers, providing greater flexibility for the network side device. For example, when the network side device needs to determine which PRACH transmission received by the network side device has the best receiving power, the network side device may indicate to the terminal that each PRACH transmission uses a same path loss estimate. The same path loss estimate corresponds to the same sending power. In a case that the sending power of each PRACH transmission is the same, the network side device may determine which PRACH transmission has the best receiving power according to the receiving power.

That each PRACH transmission in the PRACH repeated transmission has a same sending power or different sending powers may alternatively be indicated by using DCI of a PDCCH; or in a case that each PRACH transmission in the PRACH repeated transmission has a same sending power, a reference signal used for estimating a path loss is indicated by using the DCI of the PDCCH.

In an embodiment of this application, the sending power of the PRACH repeated transmission is determined by using power ramping, including one of the following:
(1) Power ramping is performed on the PRACH repeated transmission, to determine the sending power of the PRACH repeated transmission.
(2) Power ramping is performed on the PRACH repeated transmission according to a configuration of a network side device, to determine the sending power of the PRACH repeated transmission. For example, the power ramping is performed on the PRACH repeated transmission in a case that the network side device configures a power ramping step.
(3) Power ramping is performed on the PRACH repeated transmission according to an expected transmission power of a network side device for the PRACH repeated transmission, to determine the sending power of the PRACH repeated transmission. For example, the power ramping is performed on the PRACH repeated transmission in a case that the expected transmission power of the network side device for each PRACH transmission in the PRACH repeated transmission is different. The power ramping is not performed on the PRACH repeated transmission in a case that the expected transmission power of the network side device for each PRACH transmission in the PRACH repeated transmission is the same.

In an embodiment of this application, in a case that the terminal performs power ramping on the PRACH repeated transmission, if a next PRACH transmission of a current PRACH transmission meets a first preset condition, a power ramping counter configured for the PRACH repeated transmission suspends counting.

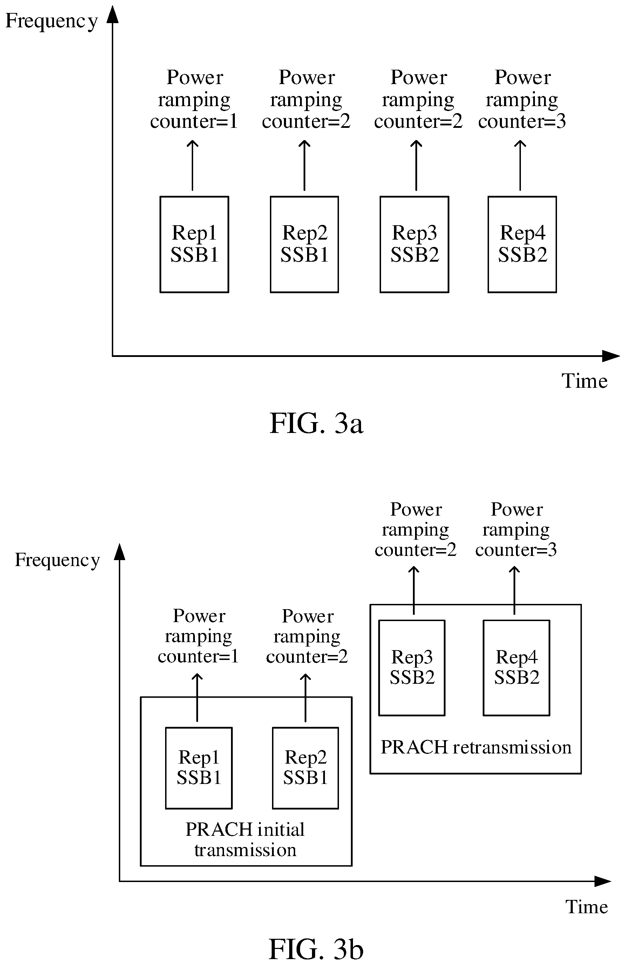

The first preset condition includes at least one of the following:
(1) Compared with the current PRACH transmission, a spatial domain transmission filter (spatial domain transmission filter) of the next PRACH transmission is changed.
   As shown in FIG. 3a, the PRACH repeated transmission includes four PRACH transmissions, namely {Rep1, Rep2, Rep3, Rep4}. The four PRACH transmissions are respectively associated with reference signals SSB1, SSB1, SSB2, and SSB2. An SSB represents a synchronization signal and PBCH block (Synchronization Signal and PBCH block). When the power ramping is supported, the power ramping is performed on Rep2. That is, the counter increases to 2 from 1 at Rep2 relative to Rep1. In other words, when Rep2 is transmitted, the sending power increases a power ramping step based on a power of transmitting Rep1. For Rep3, because Rep3 is associated with SSB2, Rep2 is associated with SSB1, and Rep3 and Rep2 are associated with different SSBs, when Rep3 is transmitted, the power ramping is suspended, and the counter does not increase a count.
(2) A priority order of allocating power to uplink channels (the priority order of allocating power to uplink channels) referred by the next PRACH transmission does not allow the power ramping counter configured for the PRACH repeated transmission to increase the count.
(3) Power allocation in an operation of E-UTRA NR dual connectivity with MCG using E-UTRA and SCG using NR (E-UTRA NR dual connectivity with MCG using E-UTRA and SCG using NR, EN-DC) or an operation of NR NR dual connectivity (NR NR Dual Connectivity, NR-DC) does not allow the power ramping counter to increase the count. E-UTRA is the abbreviation of evolved UMTS terrestrial radio access (Evolved UMTS Terrestrial Radio Access), UMTS is the abbreviation of universal mobile telecommunications system (Universal Mobile Telecommunications System), MCG is the abbreviation of master cell group (Master cell group), and SCG is the abbreviation of secondary cell group (Secondary cell group).
(4) A slot format is not allowed to be used in the next PRACH transmission.
(5) The next PRACH transmission is in a same slot with another transmission.
(6) In a case that a gap between the next PRACH transmission and the another transmission is less than a preset threshold, the next PRACH transmission is not performed. The preset threshold may be set according to an actual situation, and is not limited herein.

The another transmission in the above includes a physical uplink shared channel (Physical Uplink Shared Channel, PUSCH) transmission, a physical uplink control channel (Physical Uplink Control Channel, PUCCH), or a sounding reference signal (Sounding Reference Signal, SRS) transmission.

In an embodiment of this application, in a case that the terminal performs power ramping on the PRACH repeated transmission, if the next PRACH transmission of the current PRACH transmission meets a second preset condition, the power ramping counter increases the count. The second preset condition includes: compared with the current PRACH transmission, a spatial domain transmission filter of the next PRACH transmission remains unchanged.

In an embodiment of this application, the power ramping counter configured for the PRACH repeated transmission has a same count as a power ramping counter configured for PRACH retransmission. After each PRACH repeated transmission or each PRACH retransmission, the power continues to increase to an allowed maximum value.

It should be noted that a PRACH initial transmission may include the PRACH repeated transmission, and the PRACH retransmission may also include the PRACH repeated transmission.

As shown in FIG. 3b, the power ramping counter configured for the PRACH repeated transmission has the same count as the power ramping counter configured for the PRACH retransmission in FIG. 3b. Each PRACH includes the PRACH initial transmission and one PRACH retransmission. The PRACH initial transmission and the PRACH retransmission respectively has two repeated transmissions. In the PRACH initial transmission, reference signals associated with the two repeated transmissions are the same, and are both associated with SSB 1, and the power ramping counter increases the count from 1 to 2. In the PRACH retransmission, Rep3 is associated with SSB2, SSB2 is different from SSB1 with which the last PRACH transmission Rep2 in the PRACH initial transmission is associated, and the power ramping counter does not increase the count. The second PRACH transmission Rep4 in the PRACH retransmission is associated with the same reference signal as Rep3, because the reference signal associated with Rep4 is still SSB2. The power ramping counter further increases the count to 3.

In an embodiment of this application, a maximum quantity of the PRACH transmission is: a sum of a maximum quantity of PRACH repeated transmissions included in PRACH initial transmission and a maximum quantity of PRACH repeated transmissions included in PRACH retransmission. When a PRACH transmission count reaches a maximum value, a random access error is announced. A transmission quantity of random access of the terminal is the maximum quantity of the PRACH transmissions.

In an embodiment of this application, if the power ramping counter configured for the PRACH repeated transmission has the same count as the power ramping counter configured for the PRACH retransmission, the maximum quantity of the PRACH transmission is: a sum of a maximum quantity of PRACH repeated transmissions included in PRACH initial transmission and a maximum quantity of PRACH repeated transmissions included in PRACH retransmission.

In addition, a maximum transmission count may alternatively be separately configured for the PRACH repeated transmission. If the PRACH repeated transmission supports the power ramping, because repetition has been performed on each transmission and retransmission, a relatively small maximum transmission count may be configured.

In this embodiment of this application, each PRACH transmission in the PRACH repeated transmission may have a same sending power, or may have different sending powers. For a case that different PRACH transmissions in the PRACH repeated transmission do not need to ensure a same power, supporting the power ramping based on the PRACH repeated transmission is conducive to the PRACH transmission using a higher power, thereby further reducing a random access delay.

For power ramping that only supports the PRACH retransmission but does not support the PRACH repeated transmission, in a case that the PRACH repeated transmission has been performed on each retransmission, the maximum quantity of the retransmission may be reduced compared with a case in which the PRACH repeated transmission is not performed, to determine to end a current random access process earlier.

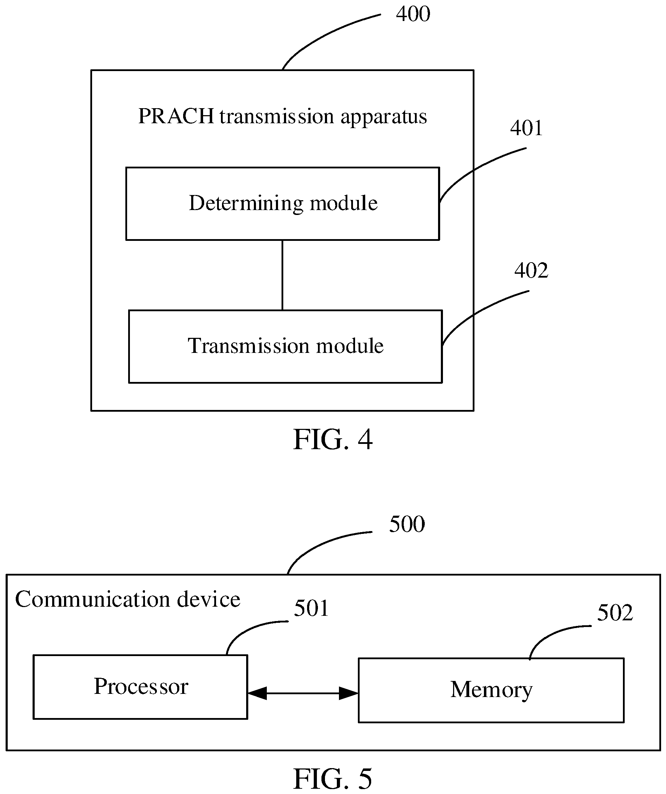

The PRACH transmission method provided in FIG. 2 of this application may be performed by a PRACH transmission apparatus 400. An apparatus for the PRACH transmission method provided in the embodiments of this application is described by using an example in which the PRACH transmission apparatus 400 performs the PRACH transmission method in this embodiment of this application. As shown in FIG. 4, an embodiment of this application provides a PRACH transmission apparatus 400, including:
a determining module 401, configured to determine a sending power of a physical random access channel PRACH repeated transmission according to a target indication, where the target indication is used for indicating whether sending powers of PRACH transmissions in the PRACH repeated transmission are the same; and
a transmission module 402, configured to perform PRACH repeated transmission according to the sending power of the PRACH repeated transmission.

Further, the sending power of the PRACH repeated transmission meets at least one of the following:
each PRACH transmission in the PRACH repeated transmission has a same sending power;
PRACH transmissions associated with a same reference signal in the PRACH repeated transmission have same sending powers; and
PRACH transmissions associated with different reference signals in the PRACH repeated transmission have different sending powers.

Further, in a case that each PRACH transmission in the PRACH repeated transmission has the same sending power, a reference signal used for estimating a path loss is indicated by using downlink control information DCI of a PDCCH.

Further, the target indication includes at least one of the following information:
a protocol specification indication;
a network side device indication; and
a DCI indication of a PDCCH.

Further, the determining module 401 is further configured to determine the sending power of the PRACH repeated transmission through power ramping.

Further, the determining module 401 includes one of the following:
a first determining sub-module, configured to perform power ramping on the PRACH repeated transmission, to determine the sending power of the PRACH repeated transmission;
a second determining sub-module, configured to perform power ramping on the PRACH repeated transmission according to a configuration of a network side device, to determine the sending power of the PRACH repeated transmission; or
a third determining sub-module, configured to perform power ramping on the PRACH repeated transmission according to an expected transmission power of a network side device for the PRACH repeated transmission, to determine the sending power of the PRACH repeated transmission.

Further, the second determining sub-module is configured to perform power ramping on the PRACH repeated transmission in a case that the network side device configures a power ramping step.

Further, the third determining sub-module is configured to perform power ramping on the PRACH repeated transmission in a case that the expected transmission power of the network side device for each PRACH transmission in the PRACH repeated transmission is different.

Further, in a case that the terminal performs power ramping on the PRACH repeated transmission, if a next PRACH transmission of a current PRACH transmission meets a first preset condition, a power ramping counter configured for the PRACH repeated transmission suspends counting.

Further, the first preset condition includes at least one of the following:
compared with the current PRACH transmission, a spatial domain transmission filter of the next PRACH transmission is changed;
a priority order of allocating power to uplink channels referred by the next PRACH transmission does not allow the power ramping counter to increase a count;
power allocation in an EN-DC operation or an NR-DC operation does not allow the power ramping counter to increase a count;
a slot format is not allowed to be used in the next PRACH transmission;
the next PRACH transmission is in a same slot with another transmission; and
in a case that a gap between the next PRACH transmission and the another transmission is less than a preset threshold, the next PRACH transmission is not performed.

Further, the another transmission includes a PUSCH transmission, a PUCCH transmission, or an SRS transmission.

Further, in a case that the terminal performs power ramping on the PRACH repeated transmission, if a next PRACH transmission of a current PRACH transmission meets a second preset condition, a power ramping counter increases a count.

Further, the second preset condition includes: compared with the current PRACH transmission, a spatial domain transmission filter of the next PRACH transmission remains unchanged.

Further, a power ramping counter configured for the PRACH repeated transmission has a same count as a power ramping counter configured for PRACH retransmission.

Further, a maximum quantity of the PRACH transmissions is: a sum of a maximum quantity of PRACH repeated transmissions included in PRACH initial transmission and a maximum quantity of PRACH repeated transmissions included in PRACH retransmission.

Further, a transmission quantity of random access of the terminal is the maximum quantity of the PRACH transmissions.

The PRACH transmission apparatus 400 in this embodiment of this application may be an electronic device, for example, an electronic device with an operating system, or may be a component in the electronic device, for example, an integrated circuit or a chip. The electronic device may be a terminal, or may another device other than the terminal. For example, the terminal may include, but is not limited to, a type of the terminal 11 listed above. The another device may be a server, network attached storage (Network Attached Storage, NAS), which is not specifically limited in this embodiment of this application.

The PRACH transmission apparatus 400 provided in this embodiment of this application can implement processes implemented in the method embodiments of FIG. 2, and the same technical effects can be achieved. To avoid repetition, details are not described herein again.

Optionally, as shown in FIG. 5, an embodiment of this application further provides a communication device 500, including a processor 501 and a memory 502. The memory 502 stores a program or instructions executable on the processor 501. For example, when the communication device 500 is a terminal, the program or the instructions, when executed by the processor 501, implement processes of the PRACH transmission method embodiments shown in FIG. 2, and can achieve a same technical effect, which is not repeated herein again.

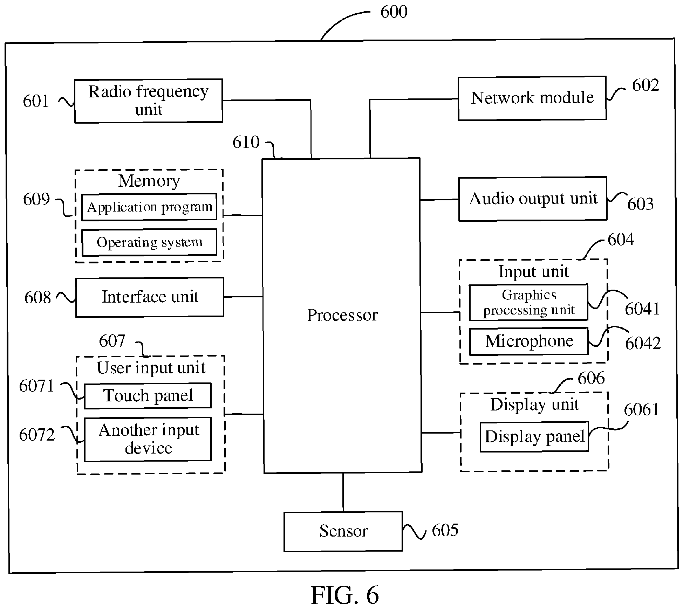

An embodiment of this application further provides a terminal, including a processor and a communication interface. The processor is configured to determine a sending power of a physical random access channel PRACH repeated transmission according to a target indication. The target indication is used for indicating whether sending powers of PRACH transmissions in the PRACH repeated transmission are the same. The communication interface is configured to perform PRACH repeated transmission according to the sending power of the PRACH repeated transmission. The terminal embodiment corresponds to the terminal side method embodiments, and all implementation processes and implementations of the method embodiments can be applied in the terminal embodiment, and can achieve a same technical effect. Specifically, FIG. 6 is a schematic diagram of a hardware structure of a terminal implementing the embodiments of this application.

The terminal 600 includes, but is not limited to: at least a part of components such as a radio frequency unit 601, a network module 602, an audio output unit 603, an input unit 604, a sensor 605, a display unit 606, a user input unit 607, an interface unit 608, a memory 609, and a processor 610.

A person skilled in the art may understand that the terminal 600 may further include a power supply (such as a battery) for supplying power to the components. The power supply may be logically connected to the processor 610 by using a power management system, thereby implementing functions, such as charging, discharging, and power consumption management, by using the power management system. A terminal structure shown in FIG. 6 does not constitute a limitation to the terminal, and the terminal may include more or fewer components than those shown in the figure, or some components may be combined, or a different component deployment may be used. This is not described herein again.

It should be understood that in this embodiment of this application, the input unit 604 may include a graphics processing unit (Graphics Processing Unit, GPU) 6041 and a microphone 6042. The graphics processing unit 6041 performs processing on image data of a static picture or a video that is obtained by an image acquisition device (for example, a camera) in a video acquisition mode or an image acquisition mode. The display unit 606 may include a display panel 6061, and the display panel 6061 may be configured by using a liquid crystal display, organic light-emitting diode, or the like. The user input unit 607 includes at least one of a touch panel 6071 and another input device 6072. The touch panel 6071 is also referred to as a touch screen. The touch panel 6071 may include two parts: a touch detection apparatus and a touch controller. The another input device 6072 may include, but is not limited to, a physical keyboard, a functional key (such as a volume control key or a switch key), a track ball, a mouse, and a joystick, which are not described herein again.

In this embodiment of this application, the radio frequency unit 601 receives downlink data from a network side device, and then may transmit the downlink data to the processor 610 for processing. In addition, the radio frequency unit 601 may send uplink data to the network side device. Generally, the radio frequency unit 601 includes, but is not limited to, an antenna, an amplifier, a transceiver, a coupler, a low noise amplifier, a duplexer, and the like.

The memory 609 may be configured to store a software program or instructions and various data. The memory 609 may mainly include a first storage area for storing a program or instructions and a second storage area for storing data. The first storage area may store an operating system, an application program or instructions required by at least one function (such as a sound playback function and an image display function), and the like. In addition, the memory 609 may include a volatile memory or a non-volatile memory, or the memory 609 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synch link dynamic random access memory (Synch link DRAM, SLDRAM), and a direct rambus random access memory (Direct Rambus RAM, DRRAM). The memory 609 in this embodiment of this application includes, but is not limited to, these memories and any other suitable types of memories.

The processor 610 may include one or more processing units. Optionally, the processor 610 integrates an application processor and a modem. The application processor mainly processes operations related to an operating system, a user interface, an application, and the like. The modem mainly processes wireless communication signals, for example, a baseband processor. It may be understood that the modem may alternatively not be integrated into the processor 610.

The processor 610 is configured to determine a sending power of a physical random access channel PRACH repeated transmission according to a target indication. The target indication is used for indicating whether sending powers of PRACH transmissions in the PRACH repeated transmission are the same.

The radio frequency unit 601 is configured to perform PRACH repeated transmission according to the sending power of the PRACH repeated transmission.

Further, the sending power of the PRACH repeated transmission meets at least one of the following:
each PRACH transmission in the PRACH repeated transmission has a same sending power;
PRACH transmissions associated with a same reference signal in the PRACH repeated transmission have same sending powers; and
PRACH transmissions associated with different reference signals in the PRACH repeated transmission have different sending powers.

Further, in a case that each PRACH transmission in the PRACH repeated transmission has the same sending power, a reference signal used for estimating a path loss is indicated by using downlink control information DCI of a PDCCH.

Further, the target indication includes at least one of the following information:
a protocol specification indication;
a network side device indication; and
a DCI indication of a PDCCH.

Further, the processing unit 610 is further configured to determine the sending power of the PRACH repeated transmission through power ramping.

Further, the processor 610 is further configured to perform one of the following:
performing power ramping on the PRACH repeated transmission;
performing the power ramping on the PRACH repeated transmission according to a configuration of a network side device; or
performing the power ramping on the PRACH repeated transmission according to an expected transmission power of the network side device for the PRACH repeated transmission.

Further, the processor 610 is further configured to perform power ramping on the PRACH repeated transmission in a case that the network side device configures a power ramping step.

Further, the processor 610 is further configured to perform power ramping on the PRACH repeated transmission in a case that the expected transmission power of the network side device for each PRACH transmission in the PRACH repeated transmission is different.

Further, in a case that the terminal performs power ramping on the PRACH repeated transmission, if a next PRACH transmission of a current PRACH transmission meets a first preset condition, a power ramping counter configured for the PRACH repeated transmission suspends counting.

Further, the first preset condition includes at least one of the following:
compared with the current PRACH transmission, a spatial domain transmission filter of the next PRACH transmission is changed;
a priority order of allocating power to uplink channels referred by the next PRACH transmission does not allow the power ramping counter to increase a count;
power allocation in an EN-DC operation or an NR-DC operation does not allow the power ramping counter to increase a count;
a slot format is not allowed to be used in the next PRACH transmission;
the next PRACH transmission is in a same slot with another transmission; and
in a case that a gap between the next PRACH transmission and the another transmission is less than a preset threshold, the next PRACH transmission is not performed.

Further, the another transmission includes a PUSCH transmission, a PUCCH transmission, or an SRS transmission.

Further, in a case that the terminal performs power ramping on the PRACH repeated transmission, if a next PRACH transmission of a current PRACH transmission meets a second preset condition, a power ramping counter increases a count.

Further, the second preset condition includes: compared with the current PRACH transmission, a spatial domain transmission filter of the next PRACH transmission remains unchanged.

Further, a power ramping counter configured for the PRACH repeated transmission has a same count as a power ramping counter configured for PRACH retransmission.

Further, a maximum quantity of the PRACH transmissions is: a sum of a maximum quantity of PRACH repeated transmissions included in PRACH initial transmission and a maximum quantity of PRACH repeated transmissions included in PRACH retransmission.

Further, a transmission quantity of random access of the terminal is the maximum quantity of the PRACH transmissions.

The terminal provided in this embodiment of this application can implement processes implemented in the method embodiments of FIG. 2, and the same technical effects can be achieved. To avoid repetition, details are not described herein again.

An embodiment of this application further provides a readable storage medium. The readable storage medium stores a program or instructions, the program or the instructions, when executed by a processor, implementing processes of embodiments of the PRACH transmission method, and the same technical effects can be achieved. To avoid repetition, details are not described herein again.

The processor is the processor in the terminal in the foregoing embodiment. The readable storage medium may be volatile or non-volatile. The readable storage medium includes a computer-readable storage medium, such as a computer read-only memory ROM, a random access memory RAM, a magnetic disk, or an optical disc.

An embodiment of this application further provides a chip. The chip includes a processor and a communication interface. The communication interface is coupled to the processor. The processor is configured to execute a program or instructions, to implement processes of embodiments of the PRACH transmission method, and the same technical effects can be achieved. To avoid repetition, details are not described herein again.

It should be understood that the chip provided in this embodiment of this application may also be referred to as a system-level chip, a system chip, a chip system, a system on chip, or the like.

An embodiment of this application further provides a computer program/program product. The computer program/program product is stored in a storage medium. The computer program/program product is executed by at least one processor to implement processes of the foregoing PRACH transmission method embodiments, and can achieve the same technical effect. To avoid repetition, details are not described herein again.

An embodiment of this application further provides a communication system, including: a terminal and a network side device. The terminal may be configured to perform steps of the method embodiments shown in FIG. 2.

It should be noted that terms "include", "comprise", or any other variation thereof in this specification is intended to cover a non-exclusive inclusion, which specifies the presence of stated processes, methods, objects, or apparatuses, but do not preclude the presence or addition of one or more other processes, methods, objects, or apparatuses. Without more limitations, elements defined by the sentence "including one" does not exclude that there are still other same elements in the processes, methods, objects, or apparatuses. In addition, it should be noted that the scope of the method and apparatus in the implementations of this application is not limited to performing the functions in the order shown or discussed, but may also include performing the functions in a substantially simultaneous manner or in reverse order according to the functions involved, for example, the described method may be performed in a different order than described, and various steps may be added, omitted, or combined. In addition, features described with reference to some examples may be combined in other examples.

Through the descriptions of the foregoing implementations, a person skilled in the art may clearly understand that the method in the foregoing embodiments may be implemented by using software and a necessary general hardware platform, and certainly, may alternatively be implemented by hardware, but in many cases, the former manner is a better implementation. Based on such an understanding, the technical solutions of this application essentially or the part contributing to the related art may be implemented in a form of a computer software product. The computer software product is stored in a storage medium (such as a ROM/RAM, a magnetic disk, or an optical disc) and includes several instructions for instructing a terminal (which may be a mobile phone, a computer, a server, an air conditioner, a network side device, or the like) to perform the methods described in the embodiments of this application.

The embodiments of this application are described above with reference to the accompanying drawings. However, this application is not limited to the foregoing specific implementations. The foregoing specific implementations are illustrative instead of limitative. Enlightened by this application, a person of ordinary skill in the art can make many forms without departing from the idea of this application and the scope of protection of the claims. All of the forms fall within the protection of this application.

## Claims

1. A PRACH transmission method, comprising:
determining, by a terminal, a sending power of a physical random access channel PRACH repeated transmission according to a target indication, wherein the target indication is used for indicating whether sending powers of PRACH transmissions in the PRACH repeated transmission are the same; and
performing, by the terminal, PRACH repeated transmission according to the sending power of the PRACH repeated transmission.

2. The method according to claim 1, wherein the sending power of the PRACH repeated transmission meets at least one of the following:
each PRACH transmission in the PRACH repeated transmission has a same sending power;
PRACH transmissions associated with a same reference signal in the PRACH repeated transmission have same sending powers; and
PRACH transmissions associated with different reference signals in the PRACH repeated transmission have different sending powers.

3. The method according to claim 2, wherein in a case that each PRACH transmission in the PRACH repeated transmission has the same sending power, a reference signal used for estimating a path loss is indicated by using downlink control information DCI of a PDCCH.

4. The method according to claim 1, wherein the determining a sending power of a physical random access channel PRACH repeated transmission comprises:
determining the sending power of the PRACH repeated transmission through power ramping.

5. The method according to claim 4, wherein the determining the sending power of the PRACH repeated transmission through power ramping comprises one of the following:
performing power ramping on the PRACH repeated transmission, to determine the sending power of the PRACH repeated transmission;
performing power ramping on the PRACH repeated transmission according to a configuration of a network side device, to determine the sending power of the PRACH repeated transmission; or
performing power ramping on the PRACH repeated transmission according to an expected transmission power of a network side device for the PRACH repeated transmission, to determine the sending power of the PRACH repeated transmission.

6. The method according to claim 5, wherein the performing power ramping on the PRACH repeated transmission according to a configuration of a network side device, to determine the sending power of the PRACH repeated transmission comprises:
performing power ramping on the PRACH repeated transmission in a case that the network side device configures a power ramping step, to determine the sending power of the PRACH repeated transmission.

7. The method according to claim 5, wherein the performing power ramping on the PRACH repeated transmission according to an expected transmission power of a network side device for the PRACH repeated transmission, to determine the sending power of the PRACH repeated transmission comprises:
performing power ramping on the PRACH repeated transmission in a case that the expected transmission power of the network side device for each PRACH transmission in the PRACH repeated transmission is different, to determine the sending power of the PRACH repeated transmission.

8. The method according to claim 1, wherein in a case that the terminal performs power ramping on the PRACH repeated transmission, if a next PRACH transmission of a current PRACH transmission meets a first preset condition, a power ramping counter configured for the PRACH repeated transmission suspends counting.

9. The method according to claim 8, wherein the first preset condition comprises at least one of the following:
compared with the current PRACH transmission, a spatial domain transmission filter of the next PRACH transmission is changed;
a priority order of allocating power to uplink channels referred by the next PRACH transmission does not allow the power ramping counter to increase a count;
power allocation in an EN-DC operation or an NR-DC operation does not allow the power ramping counter to increase a count;
a slot format is not allowed to be used in the next PRACH transmission;
the next PRACH transmission is in a same slot with another transmission; and
in a case that a gap between the next PRACH transmission and the another transmission is less than a preset threshold, the next PRACH transmission is not performed.

10. The method according to claim 9, wherein the another transmission comprises a PUSCH transmission, a PUCCH transmission, or an SRS transmission.

11. The method according to claim 1, wherein in a case that the terminal performs power ramping on the PRACH repeated transmission, if a next PRACH transmission of a current PRACH transmission meets a second preset condition, a power ramping counter increases a count.

12. The method according to claim 11, wherein the second preset condition comprises: compared with the current PRACH transmission, a spatial domain transmission filter of the next PRACH transmission remains unchanged.

13. The method according to claim 1, wherein a power ramping counter configured for the PRACH repeated transmission has a same count as a power ramping counter configured for PRACH retransmission.

14. The method according to claim 1, wherein a maximum quantity of the PRACH transmissions is: a sum of a maximum quantity of PRACH repeated transmissions comprised in PRACH initial transmission and a maximum quantity of PRACH repeated transmissions comprised in PRACH retransmission.

15. The method according to claim 14, wherein a transmission quantity of random access of the terminal is the maximum quantity of the PRACH transmissions.

16. A PRACH transmission apparatus, comprising:
a determining module, configured to determine a sending power of a physical random access channel PRACH repeated transmission according to a target indication, wherein the target indication is used for indicating whether sending powers of PRACH transmissions in the PRACH repeated transmission are the same; and
a transmission module, configured to perform PRACH repeated transmission according to the sending power of the PRACH repeated transmission.

17. The apparatus according to claim 16, wherein the sending power of the PRACH repeated transmission meets at least one of the following:
each PRACH transmission in the PRACH repeated transmission has a same sending power;
PRACH transmissions associated with a same reference signal in the PRACH repeated transmission have same sending powers; and
PRACH transmissions associated with different reference signals in the PRACH repeated transmission have different sending powers.

18. The apparatus according to claim 17, wherein in a case that each PRACH transmission in the PRACH repeated transmission has the same sending power, a reference signal used for estimating a path loss is indicated by using downlink control information DCI of a PDCCH.

19. A terminal, comprising a processor and a memory, wherein the memory stores a program or instructions executable on the processor, and the program or the instructions, when executed by the processor, implement steps of the PRACH transmission method according to any one of claims 1 to 15.

20. A readable storage medium, having a program or instructions stored therein, wherein the program or the instructions, when executed by a processor, implement the PRACH transmission method according to any one of claims 1 to 15.
